# EUROPEAN PATENT SPECIFICATION

(11) **EP 3 165 434 B1**
(45) Date of publication and mention of the grant of the patent: **05.12.2018**
(21) Application number: 16184322.2
(22) Date of filing: 30.01.2012
(51) Int. Cl.: B62H 3/08

(54) **TWO-WHEELER PARKING SYSTEM**
ZWEIRADPARKSYSTEM
SYSTÈME DE STATIONNEMENT DE VÉHICULES DEUX ROUES

(30) Priority: 28.01.2011 NL 2006094
(43) Date of publication of application: 10.05.2017
(62) Divisional of application: 12153064.6
(73) Proprietor: VelopA B.V., 2351 AX Leiderdorp (NL)
(72) Inventor: Vleeshouwers, Ruud Johannes Albertus, 6006 MH Weert (NL); Hupkes, Ciska, 2351 AX Leiderdorp (NL)
(74) Representative: V.O.

(56) References cited:
- EP-A2- 1 479 598
- DE-U1-202006 005 800
- GB-A- 2 429 444
- NL-C2- 1 011 598
- US-A1- 2007 107 322

## Description

This invention relates to a two-wheeler parking system, in particular to a two-wheeler parking system provided with a wheel gutter which is at least adjustable between a substantially horizontal park position and a ride-on position in which the wheel gutter extends obliquely downwards for riding a two-wheeler on and off, wherein the wheel gutter is pivotable between the park position and the ride-on position about a pivoting axis.

Such a two-wheeler parking system is generally known and is marketed, for example, as Easylift parking system. A two-wheeler can be, for example, a bicycle, a moped, a motor scooter or a motorcycle.

The known parking system is provided with a gas spring which assists the user in bringing the wheel gutter up or down. The gas spring also keeps the wheel gutter in the park position. To ensure that the wheel gutter in the ride-on position remains down, the gas spring is so positioned that a 'dead center' occurs. The dead center is chosen such that the wheel gutter in the ride-on position remains down. As a consequence, however, the gas spring does not always produce the same force in the downward and the upward movement. Indeed, the closer to the dead center, the lower the force produced by the gas spring. This is user-unfriendly because it requires the user himself to produce nearly the whole force to move the wheel gutter, for instance, up. Depending on the built-in position, the position of the dead center and the relatively high forces entailed is unfavorable. Certainly when a bicycle is in the wheel gutter, the forces that the user needs to exert are relatively high. Conversely, the wheel gutter, without bicycle, can only be brought down from the park position with a relatively high force to be produced by the user.

Such a bicycle parking system is described in NL 1011598 or GB 2 429 444, where the parking gutter, both in downward pivoting and in upward pivoting, has to be pushed through the dead center of the gas spring, after which the gas spring supports the movement.

Publications DE 202006005800 and US 2007/0107322 also describe such a bicycle parking system provided with a gas spring which has a dead center when the wheel gutter is in the park position.

Publication EP 1 479 598 describes a bicycle parking system whose wheel gutter has to be pivoted down against the force of a spring, and whereby the spring supports the rising movement of the wheel gutter. To keep the wheel gutter down, the user operates a lock. A drawback of the bicycle parking system of EP 1 479 598 is that the overall dimensions of the elastic element are relatively large. Moreover, the elastic element is set up relatively vulnerably and hence is sensitive to damage or manipulation, which may lead to failure of the system.

An object of the invention is to provide a two-wheeler parking system which obviates at least one of the above-mentioned disadvantages. In particular, an object of the invention is to provide a two-wheeler parking system which is user-friendlier and/or more compact.

To this end the invention, which is defined by claim 1, provides a two-wheeler parking system comprising a wheel gutter which is at least adjustable between a substantially horizontal park position and a ride-on position in which the wheel gutter extends obliquely downwards for riding a two-wheeler on and off, wherein the wheel gutter is pivotable between the park position and the ride-on position about a pivoting axis; furthermore comprising an elastic system for supporting the pivoting movement between the park position and the ride-on position; wherein the elastic system comprises an elastic element which is so positioned that during the pivoting movement there is a lever with respect to the pivoting axis for supporting the pivoting movement and wherein the elastic element is positioned substantially horizontally.

For the user the elastic element is set up so as to be less well accessible, than, for example, the system of EP 1 479 598, so that it is less sensitive to damage and/or sabotage.

By providing an elastic system whose elastic element during the pivotal movement always has a lever with respect to the pivoting axis, there is no dead center anymore, nor in the ride-on position of the wheel gutter, and during the whole pivoting movement a supporting force is produced by the elastic element. During a pivoting movement from the park position to the ride-on position, the user will exert a force against the force of the elastic element, so that the wheel gutter can pivot down in a controlled manner and 'dropping' down of the wheel gutter can be prevented. During a pivoting movement from the ride-on position upwards to the park position, the user will exert a force and the elastic element also exerts a force to move the wheel gutter upwards. The elastic element 'helps' the user.

Also, the elastic element may be so positioned that the overall dimensions can remain relatively small, so that a compact parking system can be obtained. For example, the elastic element in the rest condition, when the wheel gutter is in the park position, may be positioned substantially horizontally. By setting up the elastic element substantially horizontally near the wheel gutter, a compact incorporation of the system can be achieved, while at the same time the elastic element always has a lever with respect to the pivoting axis. The lever remains, also when the elastic element undergoes and/or has undergone an angular displacement as a result of the pivoting of the wheel gutter. Due to the elastic element being positioned substantially horizontally, the angular displacements of the elastic element as a result of the pivoting of the wheel gutter are relatively small, about -10° to about 10°.

Due to a supporting force being produced by the elastic element during the whole pivoting movement, the user no longer needs to produce the whole force for adjusting the wheel gutter himself, so that the system is user-friendlier than a system provided with a dead center.

The elastic element may be implemented as a gas spring, but also, for example, as a spring mechanism or a hydraulic cylinder. The elastic element may or may not be provided with a damper.

By furthermore providing a lock for locking the wheel gutter in the ride-on position, the system can become even more user-friendly. The user then does not need to produce the force to keep the wheel gutter down himself anymore. Due to the lock, the wheel gutter remains in the ride-on position until the user undoes the lock to pivot the wheel gutter upwards.

Advantageously, the elastic system is further arranged to keep the wheel gutter in the park position. Thus a compact system can be obtained, and a separate device, for example, an extra elastic element or a lock, for keeping the wheel gutter in the park position can be omitted. The elastic element is then advantageously arranged to keep the wheel gutter in the park position and to support the pivoting movement. The user can pivot the wheel gutter down from the park position relatively simply. Upon upward pivoting of the wheel gutter towards the park position, the wheel gutter readily remains in the park position.

According to an aspect of the invention, which invention is defined by claim 1, the elastic element is provided with an engagement point so that during the pivoting movement there is a lever arm between the engagement point and the pivoting axis. Due to a lever arm being always present during the pivoting movement, the elastic element always produces a force in support of the pivoting movement. As there is always a lever arm, there is no dead center, so that the elastic element during the pivoting movement can always provide a support. During downward adjustment, the user exerts a force against the force of the elastic element. During upward adjustment, the user exerts a force along with the force of the elastic element.

Advantageously, the elastic element is positioned at a distance downward from the pivoting axis, so that a compact incorporation of the elastic element is possible. For example, the distance between the elastic element and the pivoting axis is greater than about 2 cm, more preferably greater than about 5 cm, and less than about 20 cm. The distance between the elastic element and the pivoting axis depends on many factors, *inter alia* the weight of the system and the desired force to be produced.

The elastic element, for instance, may in a rest position be positioned substantially horizontally at a distance beneath the pivoting axis. During the adjustment between the ride-on position and the park position, the engagement point of the elastic element remains below the pivoting axis so that there is always a lever arm between the engagement point and the pivoting axis in order that the elastic element can produce a force.

According to another aspect of the invention, the elastic system is arranged for providing a first support in the case of a loaded wheel gutter and for providing a second support in the case of an unloaded wheel gutter. Owing to the support in the case of a loaded wheel gutter being different from the support in the case of an unloaded wheel gutter, user convenience can increase further. The support to be provided in the case of an unloaded wheel gutter is preferably lower than in the case of a loaded wheel gutter, so that, comparatively, a user needs to provide a comparable force in the case of a loaded or unloaded wheel gutter. If the elastic system is only configured for providing support in the case of a loaded wheel gutter, then the support provided in the case of an unloaded wheel gutter is comparatively large, so that the user in case of an unloaded wheel gutter has to exert relatively much force.

Depending on the loading condition of the wheel gutter, the engagement point of the elastic element traverses a first, or a second path, whereby the engagement point moves with respect to the pivoting axis so that during pivoting there is always a lever arm between the engagement point of the elastic element and the pivoting axis. Both in loaded and in unloaded condition, there is a lever between the elastic element and the pivoting axis, so that there is no dead center and always support is provided by the elastic element.

As in the loaded condition the engagement point traverses a different path than in the unloaded condition, the lever arm between the engagement point and the pivoting axis can be different in the loaded condition and the unloaded condition of the wheel gutter, so that the support is different.

Advantageously, the engagement point in the first path has a substantially constant distance with respect to the pivoting axis, so that the elastic element in the loaded condition can produce a substantially constant supporting force. The user usually experiences such a support as user-friendly.

In the second path, the distance of the engagement point with respect to the pivoting axis may be variable, for example, during upward pivoting of the wheel gutter the distance of the engagement point with respect to the pivoting axis may decrease. As a result, the elastic element provides a variable support in the case of an unloaded wheel gutter. The support is also smaller than in the case of a loaded wheel gutter, which is agreeable in use since an unloaded wheel gutter is lighter than a loaded wheel gutter. Through this approach it can be possible to keep the loaded wheel gutter in balance or even have it go up automatically. The unloaded wheel gutter can also be brought down with little force, because the upward force of the elastic element for support is smaller. Accordingly, the user can adjust the wheel gutter both for an unloaded wheel gutter and for a loaded wheel gutter with a limited force.

Advantageously, the two-wheeler parking system comprises a detection system for detecting a loaded, or unloaded, condition of the wheel gutter. The detection system can be a mechanical detection system, but may also be implemented electronically or optically, or otherwise.

Further advantageous embodiments are set forth in the subclaims.

The invention will be further elucidated on the basis of an exemplary embodiment represented in the appended drawings, in which:
Fig. 1a shows a schematic outline of a first not claimed embodiment with the wheel gutter in the park position;
Fig. 1b shows a schematic outline of the first not claimed embodiment with the wheel gutter in the ride-on position;
Fig. 2a shows a schematic outline of a second embodiment of the invention with the wheel gutter in the park position;
Fig. 2b shows a schematic outline of the second embodiment of the invention with the wheel gutter in the ride-on position in loaded condition of the wheel gutter;
Fig. 2c shows a schematic outline of the second embodiment of the invention with the wheel gutter in the ride-on position in unloaded condition of the wheel gutter;
Fig. 2d shows a schematic outline of the second embodiment of the invention with a first path for a loaded condition and a second path for an unloaded condition;
Fig. 3a shows a schematic side elevation of an embodiment of the invention with a loaded wheel gutter in the park position;
Fig. 3b shows a schematic side elevation of the embodiment of Fig. 3a with the wheel gutter in the ride-on position;
Fig. 3c shows a schematic side elevation of Fig. 3a with an unloaded wheel gutter in the park position;
Fig. 4 shows a schematic side elevation of an embodiment of a lock according to the invention; and
Fig. 5a shows a schematic side elevation of an embodiment of the invention with the wheel gutter in the ride-on position provided with a lock;
Fig. 5b shows a schematic side elevation of the embodiment of Fig. 5a with the wheel gutter in the park position provided with a lock; and
Fig. 5c shows a schematic section of the lock of the embodiment of Fig. 5a and Fig. 5b.

It is noted that the Figures are only schematic representations of preferred embodiments of the invention and should not be construed as limiting in any way. In the Figures, like parts are designated with like reference numerals.

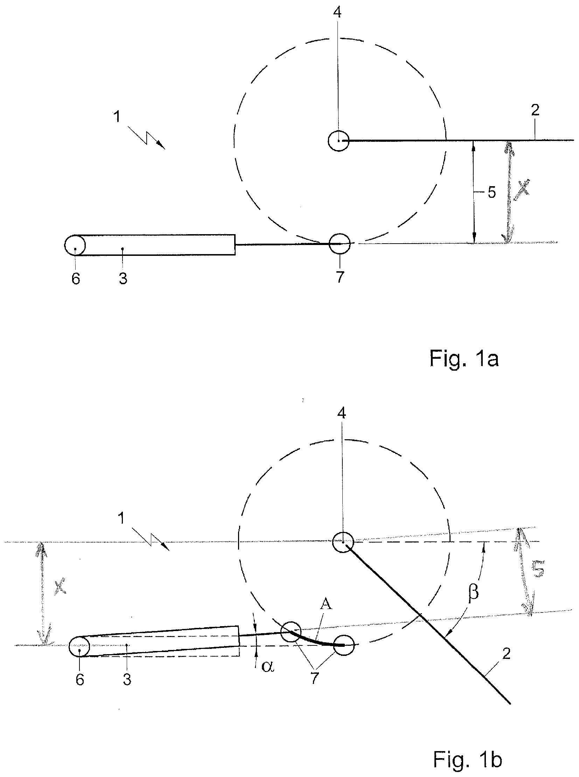

Fig. 1a shows a schematic outline of the operation of a two-wheeler parking system 1 according to the invention. A wheel gutter 2 and an elastic element 3 are schematically represented. The elastic element 3 may be implemented as a gas spring, but also, for example, as a spring system comprising a tension spring, or a compression spring or a hydraulic cylinder. Diverse variants are possible.

In the position shown in Fig. 1a, the wheel gutter 2 is in a park position. The wheel gutter 2 extends substantially horizontally. Advantageously, such a two-wheeler parking system can be used in a double-level parking system. The wheel gutter 2 can then be disposed on a second level. The elastic element 3 is in a substantially horizontal position substantially corresponding to the park position of the wheel gutter 2.

The wheel gutter 2 is pivotable between the park position shown in Fig. 1a and the ride-on position shown in Fig. 1b. In the ride-on position the wheel gutter 2 extends obliquely downwards for riding a two-wheeler on and off. In the ride-on position, an end of the wheel gutter 2 may or may not touch the ground. The wheel gutter 2 is pivotable with respect to a pivoting axis 4 through an angle β. The angle β may vary between about 30° and about 80°, for example, between about 40° and about 50°. The pivoting axis 4 is usually implemented as a hinge pivot about which the wheel gutter 2 can hinge.

The elastic element 3 is so positioned with respect to the pivoting axis 4 that during the pivoting movement between the park position and the ride-on position there is a lever 5 with respect to the pivoting axis 4 for supporting the pivoting movement. The lever 5 is schematically represented here and is proportional to the moment that the force produced by the elastic element 3 can exert about the pivoting axis 4 for supporting the pivoting movement. Upon downward pivoting of the wheel gutter 2, the user exerts a force against the force of the elastic element 3, so that the wheel gutter 2 does not drop down. Upon upward pivoting of the wheel gutter 2 the elastic element 3 helps the user by producing a moment in upward direction.

The elastic element 3 is provided at an end thereof with an attachment point 6 which in this exemplary embodiment has a fixed position. An opposite end of the elastic element 3 is provided with an engagement point 7 which moves along during adjustment of the wheel gutter 2.

The elastic element 3 is situated at a distance x downwardly from the pivoting axis 4. In the park position of the wheel gutter 2 the distance x is equal to the lever 5. During pivoting, the lever 5 varies a little as a result of the small angular displacement of the elastic element 3. The distance x remains the same. In the Figures, distance x is represented schematically, but may usually be understood to be the distance between the center of the pivoting axis 4 and the attachment point 6 or a centerline of the elastic element 3. The distance x is, for example, more than about 2 cm, preferably more than about 5 cm, and, for example, less than about 20 cm. Since the distance x in the park position of the wheel gutter 2 is equal to the lever 5, the distance x depends on various factors, including the weight, the desired supporting moment, etc. By keeping the distance x limited, a compact incorporation of the elastic element 3 can be possible, so that a compact parking system can be achieved.

In the exemplary embodiment shown in Fig. 1, the engagement point 7, as a result of the pivoting of the wheel gutter 2, traverses a path A.

The distance of the engagement point 7 with respect to the pivoting axis 4 remains substantially equal during the adjustment, due to the small angular displacement of the elastic element 3. The path A can thus describe a part of a substantially circular path about the pivoting axis 4. The position of the engagement point 7 is displaced through a relatively small angle α with respect to the substantially horizontal position of Fig. 1a. The angular displacement α is represented exaggeratedly in the Figures. The angle α here is usually relatively small, about -10° to about 10°, preferably about 0° to about 6°, more preferably about 2° to about 5°, more preferably about 4°, so that the lever produced by the elastic element 3 with respect to the pivoting axis 4 remains substantially the same during the pivoting movement of the wheel gutter 2. The lever arm 5 of the engagement point 7 with respect to the pivoting axis 4 remains substantially the same. Due to the small angular displacement through the angle α, a substantially constant supporting force is produced during the pivoting movement of the wheel gutter 2. The elastic element 3 here is substantially in a horizontal position, so that the force produced by the elastic element can be optimal.

Path A here is a path extending over a part of an approximately circular path around the pivoting axis 4. Evidently, path A can also extend over a larger part of the circular path so that the force produced by the elastic element can become larger, while the angular displacement can remain relatively small to maintain substantially the same lever with distance 5.

The elastic element 3 provides support to the user during the pivoting of the wheel gutter 2. Upon downward pivoting of the wheel gutter 2, the user exerts a force against the force of the elastic element 3, as a result of which the wheel gutter 2 does not drop down. Upon upward pivoting, the elastic element 3 helps the user by, as it were, co-lifting the wheel gutter 2 upwards, so that the force to be produced by the user can be kept limited.

As the elastic element 3 continues to produce a force, since there is always a lever arm 5 with respect to the pivoting axis 4, also in the ride-on position, the wheel gutter 2 does not simply remain down in the ride-on position. In particular in the case of an unloaded wheel gutter 2, the wheel gutter 2 does not stay down. The user must therefore produce sufficient force to keep the wheel gutter 2 down, or the wheel gutter 2 may be locked in the ride-on position. The parking system may then be provided with a lock.

The elastic element 3 may further produce a sufficient moment to keep the wheel gutter 2 in the park position. Due to the elastic element 3 in this exemplary embodiment being of substantially horizontal, i.e., lying design, optimum use can be made of the force produced by the elastic element 3, for example, to keep the wheel gutter 2 in the park position.

In the exemplary embodiment of Fig. 1, the elastic element 3 provides the same support for a loaded and an unloaded wheel gutter 2. This means that, while within acceptable standards, the force to be produced by the user in the case of an unloaded wheel gutter may be relatively large.

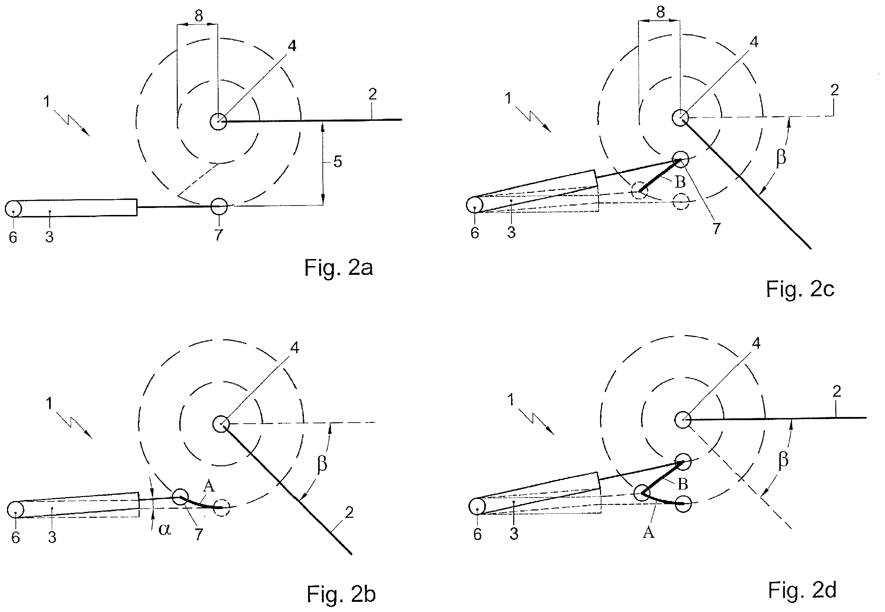

Fig. 2 shows an exemplary embodiment of a parking system according to the invention in which the support for a loaded wheel gutter 2 is different from the support for an unloaded wheel gutter 2.

Support for a loaded wheel gutter 2 proceeds in the same manner as shown in Fig. 1 and is here shown in Fig. 2a and Fig. 2b.

In the unloaded condition of the wheel gutter 2 the support that the elastic element 3 needs to produce can be smaller, so that the distance from the engagement point 7 to the pivoting axis 4 can be smaller, for example, a distance 8. In the park position of the wheel gutter 2 the elastic element 3 can keep the wheel gutter 2 in the park position with a lever arm of approximately the distance 8. Optionally, the elastic element 3 can keep the wheel gutter 2 in the park position both in loaded and in unloaded condition.

If, extending obliquely downwards, the wheel gutter 2 is in the ride-on position, the engagement point 7 of the elastic element 3 is at a greater distance, distance x, corresponding to lever 5, from the pivoting axis 4, since in the downward ride-on position the loading condition of the wheel gutter 2 can change between a loaded condition with two-wheeler and an unloaded condition without two-wheeler.

If the wheel gutter 2 is loaded with a two-wheeler, the engagement point 7 of the elastic element 3 follows the path A at a greater distance (distance 5) from the pivoting axis 4 during upward pivoting of the wheel gutter 2. The support of the elastic element 3 during the pivoting movement of a loaded wheel gutter 2 can be substantially constant, due to the small angular displacement.

If the wheel gutter 2 is unloaded, the engagement point 7 follows a path B to a shorter distance (distance 8) with respect to the pivoting axis 4 during upward pivoting of the wheel gutter 2. As a result, the moment that the elastic element 3 exerts about the pivoting axis 4 becomes smaller during the pivoting movement because the lever arm becomes smaller. The gas spring 3 is at an angle with respect to the wheel gutter 2, so that the force produced by the gas spring 3 is smaller and less optimal, in agreement with the unloaded condition of the wheel gutter 2. The support by the elastic element 3 in the case of an unloaded wheel gutter 2 is therefore variable during the pivoting movement.

For determining the loading condition of the wheel gutter 2, the parking system 1 is here provided with a detection system.

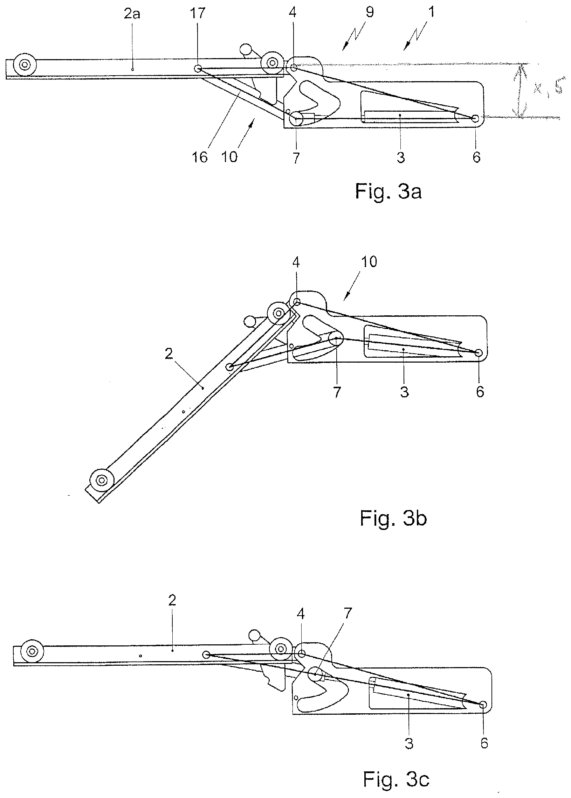

Fig. 3 shows an exemplary embodiment of a parking system 1 according to the invention. The wheel gutter 2 is shown, which is pivotable with respect to a pivoting axis 4 between a park position, shown in Fig. 3a, and a ride-on position, shown in Fig. 3b. An elastic system 9 is shown which comprises the elastic element 3, for example, a gas spring. The elastic system 9 is here in a position lower than the park position of the wheel gutter 2, in a substantially horizontal position at a distance x, corresponding to distance 5 of the lever arm, downwardly from the pivoting point 4. The angular displacement is represented exaggeratedly in Fig. 3, but is relatively small, as discussed in relation to Fig. 2.

The wheel gutter 2 is at least adjustable between the park position and the ride-on position, and optionally may be additionally adjustable in the horizontal position of the park position between a slid-in/slid-out position. In that case, the wheel gutter 2 can comprise an inner gutter 2a and an outer gutter 2b (not shown here). The inner gutter 2a is only pivotable with respect to the pivoting axis 4. The outer gutter 2b is slidable with respect to the inner gutter 2a and is disposed over the inner gutter 2a. In such an embodiment the two-wheeler stands on the outer gutter. Upon operation of such a wheel gutter, first the outer gutter may be slid out completely, the wheel gutter can be held in the slid-out park position by the elastic element. A user can thereupon pivot the slid-out gutter down by exerting a downward force. Both the inner and the outer gutter pivot down with respect to the pivoting axis 4.

The detection of the loading condition of the wheel gutter 2 is done by means of a detection system 10, which is here implemented as a rod system. Fig. 3 shows not so much the physical rod system as a schematic outline of connecting lines. For convenience, these connecting lines will be further designated with rod system 10.

The rod system 10 is only an example of a detection system. The rod system 10 in this exemplary embodiment works fully mechanically. In the ride-on position of the wheel gutter 2 the elastic element 3 is at a small angle with respect to the horizontal initial position, as shown in Fig. 1, Fig. 2 and Fig. 3b. Depending on the weight of the wheel gutter 2, hence the loading condition, the rod system 10 determines the path that the engagement point 7 follows upon pivoting of the wheel gutter 2. The path of the engagement point 7, path A or path B as shown in Fig. 2, is accordingly determined here by the rod system 10. The slots shown have no function here. Fig. 3a shows the rod system 10 and the engagement point 7 for a loaded wheel gutter 2 in the park position. Fig. 3c shows the rod system 10 and the engagement point 7 for an unloaded wheel gutter 2 in the park position.

In particular, line or rod 16 which connects a point 17 on the wheel gutter 2 with the engagement point 7 of the elastic element 3, determines the control of the engagement point 7. The setting for the control of the engagement point 7 is determined by the detection of the loading condition of the wheel gutter 2. The point 17 and the point 7 may be connected by a flexible rod, for example, an extending rod, or by a fixed rod while the point 17 may be movable. Rod 16 can also be a fixed rod, as a result of which the distance between the points 17 and 7 remains fixed, and the elastic element 3 functions as variable rod.

The detection system may be provided, for example, with a push button in the wheel gutter which can be pressed by a bicycle. The push button may be connected with the rod system, for example, via a rod, a cable, optically or electronically, or otherwise, while the direction of rod 16 can be determined depending on the loading condition of the wheel gutter.

Different embodiments of the detection system are possible. For instance, a detection system may be implemented wholly, or partly, electronically or wholly, or partly, optically. Use can be made of electrical or optical sensors, of a bascule system in the wheel gutter, of a snap system which can be operated by a wheel of the two-wheeler, or of a system to be operated by the user. Also, the user may indicate by hand whether or not a two-wheeler is on the wheel gutter, for example, by pressing a button, whereby also detection may take place. Many variants of a detection system are possible.

In the exemplary embodiment of Fig. 3 the engagement point does not run along a physical path, but the path is determined by the rod system. Other embodiments are conceivable in which the path of the engagement point is determined by, for example, a physical rising surface or recess or slot. For this too, many variants are possible.

To keep the wheel gutter 2 in the ride-on position, without the user needing to produce a force to keep the wheel gutter down, a lock 11 may be utilized. Advantageously, the wheel gutter is locked when the wheel gutter has been brought into the ride-on position by the user. By pushing the wheel gutter 2 further down, the user can unlock the wheel gutter 2 and move it upwards again.

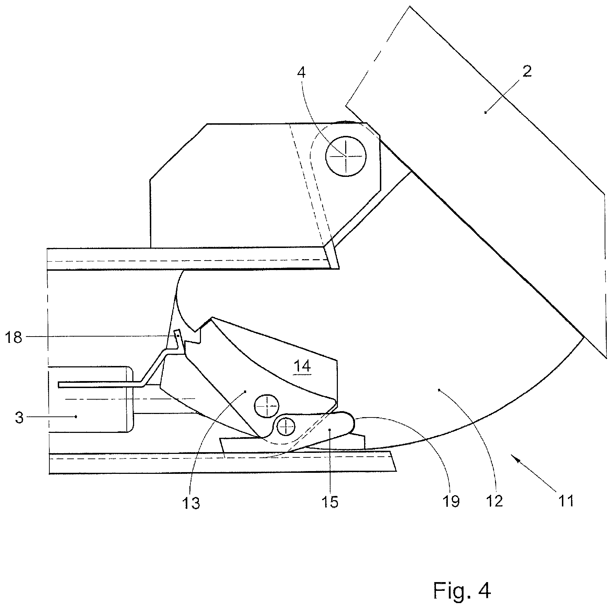

An example of a lock 11 is shown in Fig. 4. An end of the wheel gutter 2 is provided with a first coupling part 12 which is configured for cooperation with a second coupling part 13. The second coupling part 13 is hingedly attached to an end of the elastic element 3. The second coupling part 13 may, under the influence of the operation of spring 18, be received in a first recess 14 of the first coupling part 12, so that locking occurs. To prevent the wheel gutter unlocking again as a result of the user moving the wheel gutter downwards a bit too far, a third coupling part 15 is provided. The third coupling part 15 is hingedly connected with the second coupling part 13 and can be received in a second recess 19 of the first coupling part 12. As soon as the third coupling part 15 is in the recess 19 and the second coupling part 13 in the recess 14, the wheel gutter 2 is locked.

The lock may be undone by the user by pressing the wheel gutter 2 downwards a little. As a result, the first coupling part 12 presses the third coupling part 15 further down, so that the second coupling part 13 can be released from the recess 14. The lock is thereby undone and the wheel gutter 2 can be moved upwards.

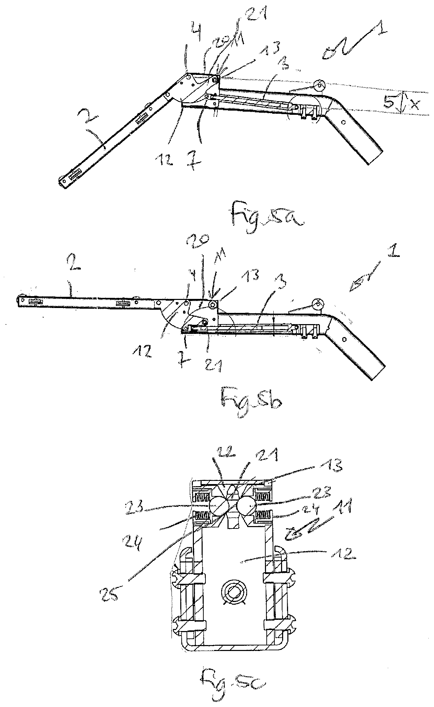

Figs. 5a, 5b and 5c show a next embodiment of a parking system according to the invention. Fig. 5a shows the parking system 1 with the wheel gutter 2 in the ride-on position and Fig. 5b shows the parking system 1 with the wheel gutter 2 in the park position. In the ride-on position the wheel gutter 2 is locked with the aid of a lock 11. The lock 11 here is an alternative embodiment to the lock 11 shown in Fig. 4. In the embodiment of Fig. 5a, Fig. 5b, the engagement point 7 of the elastic element 3, here a gas spring, traverses a same path for an unloaded wheel gutter as for a loaded wheel gutter.

The lock 11 here comprises a first coupling part 12 which is at an end of the wheel gutter 2 and a second coupling part 13. The second coupling part 13 is in a housing 20. The housing 20 further comprises the pivoting point 4 about which the wheel gutter 2 with the first coupling part 12 pivots. The first coupling part 12 is provided with a pin 21 which can snap into the second coupling part 13. The second coupling part 13 comprises a recess 22 for receiving pin 21. In uncoupled condition (not shown) the recess 22 is closed off by two stop valves 23 under spring action, here designed as spherical elements. The stop valves 23 are biased by the springs 24 in a direction for closing off the recess 22. Upon downward pivoting of the wheel gutter 2 into the ride-on position, the pin 21 moves towards the recess 22. In the ride-on position the pin 21 pushes the valves 23, against the action of springs 24, aside, allowing the pin 21 to be received in the recess 22. As the valves 23 are under spring action, they can be received in groove 25 of the pin 21, so that a locking of the wheel gutter 2 in the ride-on position has come about. To release the wheel gutter 2 from the lock again, the pin 21 will be taken out of the recess 22 by pushing the spring-biased valves 23 aside.

Due to the pin 21 pushing the valves 23 aside against the spring action, the user experiences a resistance and then an audible and/or tactile click when the valves 23 fall into the groove 25 or out of the groove 25. Through this cognitive feedback, the user is immediately made aware that the wheel gutter 2 is in the lock or out of it.

The lock 11 may be of settable design. For example, the force of the lock may be set by biasing the springs 24 more, or less. Depending on the setting of the lock 11, the pin 21 may be locked in the recess 22 more tightly or less tightly.

Many variants of a lock are possible. A lock may be implemented fully mechanically, or electronically, or partly mechanically and partly electronically. The engagement point of the elastic element may be locked and/or the position of the wheel gutter may be locked and/or a spring chamber of the elastic element may be locked. Also, locking may be initiated by the user, for example, when the user inserts a locking pin through a hole. Locking may take place, for example, at a predetermined angular displacement and/or at a predetermined force.

The claims of the parent application are repeated here below as numbered clauses.
Clause 1. A two-wheeler parking system comprising
   a wheel gutter which is at least adjustable between a substantially horizontal park position and a ride-on position in which the wheel gutter extends obliquely downwards for riding a two-wheeler on and off,
   wherein the wheel gutter is pivotable between the park position and the ride-on position about a pivoting axis;
   furthermore comprising an elastic system for supporting the pivoting movement between the park position and the ride-on position;
   wherein the elastic system comprises an elastic element which is so positioned that during the pivoting movement there is a lever with respect to the pivoting axis for supporting the pivoting movement and wherein the elastic element is positioned substantially horizontally.
Clause 2. A two-wheeler parking system according to clause 1, furthermore comprising a lock for locking the wheel gutter in the ride-on position.
Clause 3. A two-wheeler parking system according to clause 1 or 2, wherein the elastic system is furthermore arranged to keep the wheel gutter in the park position.
Clause 4. A two-wheeler parking system according to any one of the preceding clauses, wherein the elastic element is provided with an engagement point so that during the pivoting movement there is a lever arm between the engagement point and the pivoting axis.
Clause 5. A two-wheeler parking system according to any one of the preceding clauses, wherein the elastic element is positioned at a distance downwardly from the pivoting axis.
Clause 6. A two-wheeler parking system according to any one of the preceding clauses, wherein the elastic element is a gas spring.
Clause 7. A two-wheeler parking system according to any one of the preceding clauses, wherein the elastic system is arranged for providing a first support in the case of a loaded wheel gutter and for providing a second support in the case of an unloaded wheel gutter during the pivoting movement.
Clause 8. A two-wheeler parking system according to clause 7, wherein, depending on the loading condition of the wheel gutter, an engagement point of the elastic element traverses a first, or a second, path for providing the first and the second support, respectively.
Clause 9. A two-wheeler parking system according to clause 8, wherein in the first path the engagement point has a substantially constant distance with respect to the pivoting axis for providing a substantially constant force and in the second path the distance of the engagement point with respect to the pivoting axis decreases for providing a variable force.
Clause 10. A two-wheeler parking system according to any one of clauses 7-9, furthermore comprising a detection system for detecting the loading condition of the wheel gutter.
Clause 11. A two-wheeler parking system according to clause 10, wherein the detection system is a mechanical detection system.

The invention is not limited to the exemplary embodiments represented here. Diverse variants can be possible. In the embodiments shown, the elastic element in rest condition, when the wheel gutter is in the park position, is positioned horizontally. As an elastic element, a gas spring is shown here, but the elastic element may also be, for example, an elastic which is guided over pulleys located substantially in the same plane and where such a pulley system may be positioned horizontally with respect to the pivoting axis to give a lever during adjustment.

## Claims

1. A two-wheeler parking system (1) comprising
a wheel gutter (2) which is at least adjustable between a substantially horizontal park position and a ride-on position in which the wheel gutter (2) extends obliquely downwards for riding a two-wheeler on and off,
wherein the wheel gutter (2) is pivotable between the park position and the ride-on position about a pivoting axis (4) over an angle (β);
furthermore comprising an elastic system (9) for supporting the pivoting movement between the park position and the ride-on position; wherein the elastic system (9) comprises an elastic element (3) which is so positioned that during the pivoting movement there is a lever arm (5) with respect to the pivoting axis (4) for supporting the pivoting movement and wherein the elastic element (3) is positioned substantially horizontally, wherein the elastic element (3) is at one end provided with an attachment point (6) having a fixed position and at an opposite end provided with an engagement point (7) moving along during adjustment of the wheel gutter (2) **characterized in that** the elastic system (9) is arranged for providing a first support in the case of a loaded wheel gutter and for providing a different second support in the case of an unloaded wheel gutter during the pivoting movement, wherein, depending on the loading condition of the wheel gutter, the engagement point (7) of the elastic element (3) traverses a first path (A) for a loaded condition and a second path (B) for an unloaded condition for providing the first and the second support, respectively, wherein in the first path (A) the engagement point (7) has a substantially constant distance with respect to the pivoting axis (4) for providing a substantially constant force and in the second path (B) the distance of the engagement point (7) with respect to the pivoting axis decreases for providing a variable force when pivoting the wheel gutter (2) from the park position to the ride-on position, furthermore comprising a detection system (10) for detecting the loading condition of the wheel gutter (2).

2. A two-wheeler parking system according to claim 1, furthermore comprising a lock (11) for locking the wheel gutter (2) in the ride-on position.

3. A two-wheeler parking system according to claim 1 or 2, wherein the elastic system (9) is furthermore arranged to keep the wheel gutter (2) in the park position.

4. A two-wheeler parking system according to any one of the preceding claims, wherein the lever arm (5) is between the engagement point (7) and the pivoting axis (4).

5. A two-wheeler parking system according to any one of the preceding claims, wherein the elastic element (3) is positioned at a distance (x) downwardly from the pivoting axis (4).

6. A two-wheeler parking system according to any one of the preceding claims, wherein the elastic element (3) is a gas spring.

7. A two-wheeler parking system according to any one of the preceding claims , wherein the detection system (10) is a mechanical detection system.

## Patentansprüche

1. Zweiradparksystem (1), umfassend
eine Radrinne (2), die mindestens einstellbar ist zwischen einer im Wesentlichen horizontalen Parkposition und einer Auffahrposition, in der die Radrinne (2) schräg abwärts verläuft, um ein Zweirad darauf und herunter zu fahren,
wobei die Radrinne (2) schwenkbar ist zwischen der Parkposition und der Auffahrposition um eine Schwenkachse (4) über einen Winkel (ß);
ferner umfassend ein elastisches System (9) zum Unterstützen der Schwenkbewegung zwischen der Parkposition und der Auffahrposition; wobei das elastische System (9) ein elastisches Element (3) umfasst, das so positioniert ist, dass es während der Schwenkbewegung einen Hebelarm (5) in Bezug auf die Schwenkachse (4) gibt, um die Schwenkbewegung zu unterstützen, und wobei das elastische Element (3) im Wesentlichen horizontal positioniert ist, wobei das elastische Element (3) an einem Ende versehen ist mit einem Befestigungspunkt (6) mit einer festen Position und an einem gegenüberliegenden Ende versehen ist mit einem Eingriffspunkt (7), der sich während der Einstellung der Radrinne (2) mitbewegt, **dadurch gekennzeichnet, dass** das elastische System (9) angeordnet ist zum Bereitstellen einer ersten Stütze im Fall einer belasteten Radrinne und zum Bereitstellen einer anderen zweiten Stütze im Fall einer unbelasteten Radrinne während der Schwenkbewegung, wobei abhängig vom Belastungszustand der Radrinne der Eingriffspunkt (7) des elastischen Elements (3) einen ersten Weg (A) für einen belasteten Zustand und einen zweiten Weg (B) für einen unbelasteten Zustand durchquert, um die erste bzw. die zweite Stütze bereitzustellen, wobei in dem ersten Weg (A) der Eingriffspunkt (7) einen im Wesentlichen konstanten Abstand in Bezug auf die Schwenkachse (4) hat, um eine im Wesentlichen konstante Kraft bereitzustellen, und in dem zweiten Weg (B) der Abstand des Eingriffspunkts (7) in Bezug auf die Schwenkachse abnimmt, um eine variable Kraft bereitzustellen, wenn die Radrinne (2) aus der Parkposition zu der Auffahrposition geschwenkt wird, ferner umfassend ein Erkennungssystem (10) zum Erkennen des Belastungszustands der Radrinne (2).

2. Zweiradparksystem nach Anspruch 1, ferner umfassend einen Riegel (11) zum Verriegeln der Radrinne (2) in der Auffahrposition.

3. Zweiradparksystem nach Anspruch 1 oder 2, wobei das elastische System (9) ferner angeordnet ist, um die Radrinne (2) in der Parkposition zu halten.

4. Zweiradparksystem nach einem der vorhergehenden Ansprüche, wobei der Hebelarm (5) zwischen dem Eingriffspunkt (7) und der Schwenkachse (4) ist.

5. Zweiradparksystem nach einem der vorhergehenden Ansprüche, wobei das elastische Element (3) in einem Abstand (x) abwärts von der Schwenkachse (4) positioniert ist.

6. Zweiradparksystem nach einem der vorhergehenden Ansprüche, wobei das elastische Element (3) eine Gasfeder ist.

7. Zweiradparksystem nach einem der vorhergehenden Ansprüche, wobei das Erkennungssystem (10) ein mechanisches Erkennungssystem ist.

## Revendications

1. Système de stationnement de véhicules deux roues (1) comprenant
une rigole de roue (2) qui est au moins réglable entre une position de stationnement sensiblement horizontale et une position d'utilisation dans laquelle la rigole de roue (2) s'étend à l'oblique vers le bas pour monter sur et descendre d'un véhicule deux roues,
dans lequel la rigole de roue (2) peut pivoter entre la position de stationnement et la position d'utilisation autour d'un axe de pivotement (4) sur un angle (β) ;
comprenant en outre un système élastique (9) destiné à supporter le mouvement de pivotement entre la position de stationnement et la position d'utilisation ; dans lequel le système élastique (9) comprend un élément élastique (3) qui est positionné de sorte que, pendant le mouvement de pivotement, un bras de levier (5) existe par rapport à l'axe de pivotement (4) afin de supporter le mouvement de pivotement et dans lequel l'élément élastique (3) est positionné sensiblement à l'horizontale, dans lequel l'élément élastique (3) se trouve à une extrémité munie d'un point de fixation (6) qui présente une position fixe, et à une extrémité opposée munie d'un point d'engagement (7) se déplaçant pendant le réglage de la rigole de roue (2), **caractérisé en ce que** le système élastique (9) est prévu pour assurer un premier support en cas de rigole de roue chargée, et pour assurer un second support différent en cas de rigole de roue déchargée pendant le mouvement de pivotement, dans lequel, selon la condition de chargement de la rigole de roue, le point d'engagement (7) de l'élément élastique (3) traverse un premier trajet (A) pour une condition de chargement et un second trajet (B) pour une condition de déchargement de façon à assurer le premier et le second support, respectivement, dans lequel, sur le premier trajet (A), le point d'engagement (7) présente une distance sensiblement constante par rapport à l'axe de pivotement (4) de façon à garantir une force sensiblement constante et, sur le second trajet (B), la distance entre le point d'engagement (7) et l'axe de pivotement diminue de façon à garantir une force variable lors du pivotement de la rigole de roue (2) entre la position de stationnement et la position d'utilisation, le système comprenant en outre un système de détection (10) destiné à détecter la condition de chargement de la rigole de roue (2).

2. Système de stationnement de véhicule deux roues selon la revendication 1, comprenant en outre un verrou (11) destiné à bloquer la rigole de roue (2) dans la position d'utilisation.

3. Système de stationnement de véhicule deux roues selon la revendication 1 ou 2, dans lequel le système élastique (9) est en outre prévu pour maintenir la rigole de roue (2) dans la position de stationnement.

4. Système de stationnement de véhicule deux roues selon l'une quelconque des revendications précédentes, dans lequel le bras de levier (5) se trouve entre le point d'engagement (7) et l'axe de pivotement (4).

5. Système de stationnement de véhicule deux roues selon l'une quelconque des revendications précédentes, dans lequel l'élément élastique (3) est positionné à une distance (x), vers le bas, de l'axe de pivotement (4).

6. Système de stationnement de véhicule deux roues selon l'une quelconque des revendications précédentes, dans lequel l'élément élastique (3) est un ressort à gaz.

7. Système de stationnement de véhicule deux roues selon l'une quelconque des revendications précédentes, dans lequel le système de détection (10) est un système de détection mécanique.
